# EUROPÄISCHE PATENTSCHRIFT

(11) **EP 1 526 981 B1**
(45) Veröffentlichungstag und Bekanntmachung des Hinweises auf die Patenterteilung: **25.02.2009**
(21) Anmeldenummer: 03766138.6
(22) Anmeldetag: 09.07.2003
(51) Int. Cl.: B60N 2/07, B60N 2/42, B60R 22/26, B60N 2/433

(54) **SICHERHEITSEINRICHTUNG FÜR FAHRZEUGSITZE**
SAFETY DEVICE FOR VEHICLE SEATS
SYSTEME DE SECURITE POUR SIEGES DE VEHICULE

(30) Priorität: 31.07.2002 DE 10235086
(43) Veröffentlichungstag der Anmeldung: 04.05.2005
(73) Patentinhaber: Johnson Controls GmbH, 51399 Burscheid (DE)
(72) Erfinder: KULIHA, Norbert, 52477 Alsdorf (DE); SCHMALE, Uwe, 42499 Hückeswagen (DE); ENGELS, Bernd, 42897 Remscheid (DE)
(74) Vertreter: Wolff, Felix
(86) Internationale Anmeldenummer: PCT/EP2003/007375
(87) Internationale Veröffentlichungsnummer: WO 2004/012958

(56) Entgegenhaltungen:
- EP-A- 0 900 689
- WO-A-00/27667
- US-A- 4 676 556
- US-A- 4 729 602
- US-A- 5 775 780
- US-A1- 2002 033 625

## Beschreibung

Die vorliegende Erfindung betrifft eine Sicherheitseinrichtung mit einem über seitliche Führungen innerhalb eines Fahrzeugs gehalterten Fahrzeugsitz, bestehend aus mindestens einer im Bereich zwischen den Führungen ortsfest im Fahrzeug-Bodenbereich anzuordnenden Sicherungsschiene mit zugehörigen, mit dem Fahrzeugsitz verbundenen oder zu verbindenden und derart mit der Sicherungsschiene zusammenwirkenden Sicherungsmitteln, dass die Sicherungsmittel bei regulären Sitzbelastungen relativ zu der Sicherungsschiene berührungslos angeordnet sind und durch irreguläre, insbesondere unfallbedingte Verformungen und/oder Bewegungen im Bereich des Fahrzeugsitzes in einen den Fahrzeugsitz gegen weitergehende Verformungen/Bewegungen arretierenden Eingriff mit der Sicherungsschiene gelangen.

Eine derartige Sicherheitseinrichtung ist beispielsweise in der WO 00/27667 beschrieben. Diese bekannte Einrichtung ist für einen Mehrfachsitz, d. h. eine Sitzbank, vorgesehen, die über zwei seitliche, parallele Schiebeführungen innerhalb des Fahrzeugs über einen Verstellbereich hinweg verschiebbar und in unterschiedlichen Positionen arretierbar geführt ist. Auf den Sitz bzw. die Sitzbank wirkten bei starken Verzögerungen und vor allem bei Unfällen (Frontal und Heckstößen) große Reaktionskräfte, die so hoch sein können, dass es ohne eine Sicherheitseinrichtung zu Deformationen der gesamten Sitzbank bzw. ihrer Tragkonstruktion und weiterhin auch zu Verformungen im Bereich der seitlichen Führungen sowie schlimmstenfalls sogar zu einem Herausreißen der gesamten Sitzanordnung kommen könnte. Dies wird durch die Sicherheitseinrichtung vermieden, indem die Sicherungsschiene zwischen den seitlichen Sitz-Schiebeführungen und zu diesen parallel angeordnet wird, wobei die als Sicherungsschlitten ausgebildeten Sicherungsmittel während regulärer Verschiebebewegungen und in Positionen innerhalb des Verstellbereichs der Sitzbank frei längsbeweglich relativ zu der Sicherungsschiene angeordnet ist, aber durch irreguläre, bei starken, beispielsweise unfallbedingten Verzögerungen oder Beschleunigungen auftretende Verformungen im Bereich der Sitzbank in einen die Sitzbank arretierenden Eingriff mit der Sicherungsschiene gelangen. Dieser Eingriff erfolgt bei der bekannten Sicherheitseinrichtung im Bereich von seitlichen Haltestegen der etwa U-förmig ausgebildeten, nach oben offenen Sicherungsschiene, wobei als Arretiermittel mehrere über die Schienenlänge verteilte Aussparungen im Bereich der Haltestege zum Eingriff mindestens eines Arretierelementes des Sicherungsschlittens vorgesehen sind. Daher erfolgt hier die Abstützung der Reaktionskräfte ausschließlich im oberen Endbereich der Haltestege der Sicherungsschiene. Deshalb muß bei der bekannten Ausführung die Sicherungsschiene sehr stabil und folglich groß dimensioniert sein, um die an einer Stelle konzentriert auftretenden Kräfte abstützen zu können.

Aus der US-A-5,775,780 A ist ein sowohl bei horizontalen oder auch bei vertikalen Reaktionskräften aktivierbares Sicherungsmittel bekannt. Die WO 00/27667 A offenbart eine Sicherungseinrichtung bestehend aus einem im Bereich zwischen den Führungen angeordneten Sicherungsmittel.

Der vorliegenden Erfindung liegt die Aufgabe zugrunde, eine Sicherheitseinrichtung der genannten Art so zu verbessern, dass unter Aufrechterhaltung einer effektiven Sicherungsfunktion die Bestandteile deutlich leichter und kleiner dimensioniert sein können.

Die Aufgabe wird mit einer Sicherungseinrichtung gemäß Anspruch 1 gelöst. Somit wird erfindungsgemäß eine Aufteilung der Reaktionskräfte auf verschiedene Eingriffsbereiche erreicht. Diesem Gedanken liegt die Erkenntnis zugrunde, dass die in den meisten Fällen auftretenden Reaktionskräfte zu etwa 40 % in Richtung einer horizontalen Fahrzeug-Längsachse (X-Achse des üblichen Fahrzeug-Koordinatensystems) und zu etwa 60 % in Richtung einer Vertikalachse (Z-Achse) und eventuell einer horizontalen Querachse (Y-Achse) wirken. Deshalb weisen die Sicherungsmittel erfindungsgemäß ein erstes Eingriffsteil zur Aufnahme von Kräften hauptsächlich in Richtung der Vertikalachse (Z) und gegebenenfalls auch der Querachse (Y) sowie ein separates zweites Eingriffsteil zur Aufnahme hauptsächlich der in Richtung der Längsachse (X) wirkenden Kräfte auf. Hierbei is erfindungsgemäß vorgesehen, dass das zweite Eingriffsteil derart relativ zu dem ersten Eingriffsteil bewegbar ist, dass es aus einer Nichteingriffsstellung durch Beaufschlagung mit einer bestimmten Betätigungskraft auch unabhängig von sowie insbesondere auch schon zeitlich vor dem ersten Eingriffsteil in eine Eingriffsstellung bewegbar ist. Daraus resultiert der weitere Vorteil, dass als Betätigungskraft eine Sicherheitsgurt-Zugkraft eingesetzt werden kann, indem das zweite Eingriffsteil zur Betätigung mit einer Sicherheitsgurt-Halterung (insbesondere mit einem Gurtschloß im Sitzbereich) verbunden ist. Auf diese Weise werden durch eine gurtkraftaktivierte Steuerung die in Richtung der Längsachse wirkenden Kräfte bereits abgestützt, noch bevor es zu solchen Verformungen im Bereich der Sitzstruktur kommen kann, durch die dann insbesondere in Richtung der Vertikalachse wirkende Kräfte entstehen.

Durch die erfindungsgemäße Kraftaufteilung kann vor allem die Sicherungsschiene deutlich leichter und kleiner dimensioniert werden. Bei einer Ausführung, bei der die Sicherungsschiene einen U- oder liegend C-förmigen, in Richtung des Sitzes nach oben zum Eingriff der Sicherungsmittel offenen Querschnitt mit einem Boden und zwei eine Längsöffnung begrenzenden Halteschenkeln aufweist, sind erfindungsgemäß im Bereich des Bodens Arretierrmittel insbesondere in Form von mehreren in Schienen-Längsrichtung verteilten, verzahnungsartigen Aussparungen zum Eingriff eines klinkenartigen Arretierabschnittes des zweiten Eingriffsteils vorgesehen. Das erste Eingriffsteil hintergreift - analog zum Stand der Technik - mit Stützabschnitten die Halteschenkel der Sicherungsschiene, wobei aber durch die Erfindung hier nur noch Kräfte in Richtung der Vertikalachse und gegebenenfalls der Querachse aufgenommen werden.

Weitere vorteilhafte Ausgestaltungsmerkmale der Erfindung sind in den Unteransprüchen sowie der nachfolgenden Beschreibung enthalten.

Anhand von bevorzugten, in der Zeichnung veranschaulichten Ausführungsbeispielen soll die Erfindung genauer erläutert werden. Dabei zeigen:
- Fig. 1: eine erste Ausführungsform einer erfindungsgemäßen Sicherheitseinrichtung in einer Perspektivansicht schräg von vorne und oben,
- Fig. 2: eine Perspektivansicht schräg von hinten,
- Fig. 3: eine weitere Perspektivansicht zum Teil aufgebrochen zur Einsicht auf die Sicherungsmittel,
- Fig. 4: einen Längsschnitt durch die Sicherheitseinrichtung in der Ausgangsstellung (Nichteingriffsstellung)
- Fig. 5: eine Ansicht wie in Fig. 4, jedoch in der Eingriffsstellung,
- Fig. 6: einen vergrößerten Querschnitt in der Ebene VI-VI gemäß Fig. 4,
- Fig. 7: einen Querschnitt in der Ebene VII-VII gemäß Fig. 4,
- Fig. 8: eine zweite Ausführungsform der erfindungsgemäßen Sicherheitseinrichtung in einer Perspektivansicht schräg von hinten,
- Fig. 9: einen Längsschnitt durch die Ausführung nach Fig. 8 (Schnittebene IX-IX in Fig. 10) und
- Fig. 10: einen vergrößerten Querschnitt in der Ebene X-X gemäß Fig. 9.

In den verschiedenen Figuren der Zeichnung sind gleiche bzw. sich funktionell entsprechende Teile und Komponenten stets mit den gleichen Bezugszeichen versehen, so dass sie auch in der Regel jeweils nur einmal beschrieben zu werden brauchen.

In den Zeichnungsfiguren ist von einem mit einer erfindungsgemäßen Sicherheitseinrichtung 1 zu sichernden Fahrzeugsitz, der auch als Mehrfachsitz bzw. Sitzbank ausgebildet sein kann, lediglich eine tragende Sitzstruktur bzw. ein Sitzrahmen 2 mit einem von mehreren Querträgern 4 und einem von mehreren Längsträgern 6 angedeutet. Der Fahrzeugsitz bzw. sein Sitzrahmen 2 kann über zwei nicht dargestellte seitliche, zueinander parallele Schiebeführungen innerhalb eines Fahrzeugs über einen bestimmten Verstellbereich hinweg in Fahrzeug-Längsrichtung (X-Achse eines üblichen Fahrzeug-Koordinatensystems) verschiebbar und hierbei in unterschiedlichen Positionen arretierbar geführt sein.

Die Sicherheitseinrichtung 1 besteht im Wesentlichen aus (mindestens) einer im Bereich zwischen den Sitz-Führungen ortsfest und parallel zur Verschieberichtung des Sitzes im Fahrzeug-Bodenbereich anzuordnenden Sicherungsschiene 8 mit zugehörigen, mit dem Fahrzeugsitz bzw. dem Sitzrahmen 2 verbundenen oder zu verbindenden und derart mit der Sicherungsschiene 8 zusammenwirkenden Sicherungsmitteln 10, dass die Sicherungsmittel 10 bei regulären Sitzbelastungen relativ zu der Sicherungsschiene 8 berührungslos und dadurch innerhalb des Sitz-Verstellbereichs frei längsbeweglich angeordnet sind, aber durch irreguläre, insbesondere unfallbedingte Verformung und/oder Bewegungen im Bereich des Fahrzeugsitzes bzw. des Sitzrahmens 2 in einen den Sitz gegen weitergehende Verformungen und/oder Bewegungen arretierenden Eingriff mit der Sicherungsschiene 8 gelangen.

Erfindungsgemäß sind die Sicherungsmittel 10 und die Sicherungsschiene 8 derart ausgebildet, dass über den Sitz entstehende Reaktionskräfte bei Eingriff der Sicherungsmittel 10 in mindestens zwei verschiedenen Eingriffsbereichen der Sicherungsschiene 8 aufgenommen werden.

In den dargestellten Ausführungsbeispielen weist die Sicherungsschiene 8 einen etwa U- oder liegend C-förmigen, in Richtung des Sitzes nach oben zum Eingriff der Sicherungsmittel 10 offenen Querschnitt mit einem Boden 12 und zwei eine schlitzförmige Längsöffnung 14 begrenzenden Halteschenkeln 16 auf. Die Halteschenkel 16 sind zweckmäßigerweise im oberen, freien Endbereich zur Bildung von Stützrändern 18 nach innen um etwa 180° umgebogen.

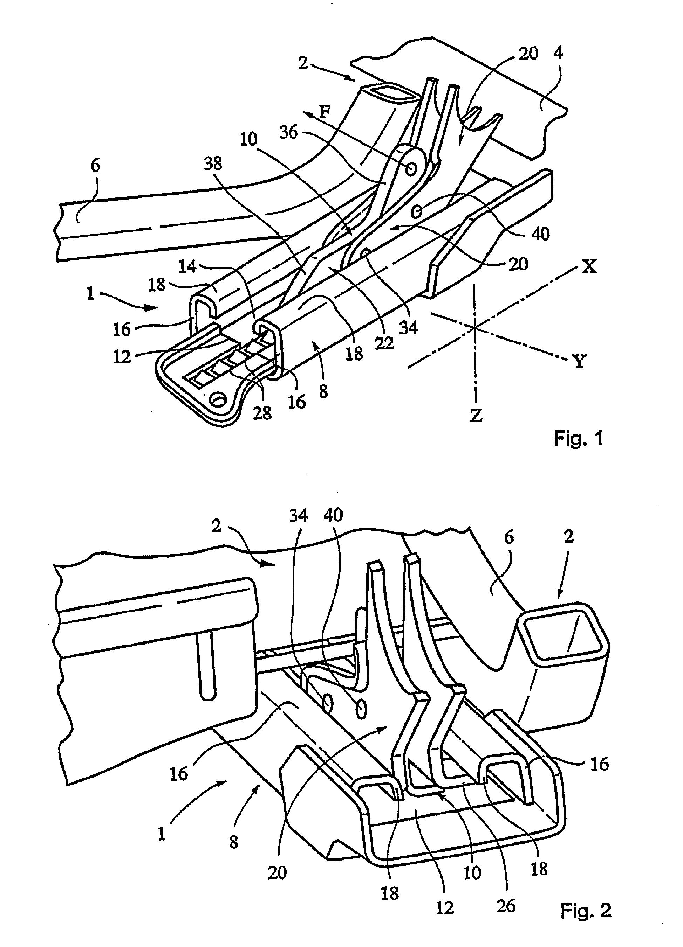

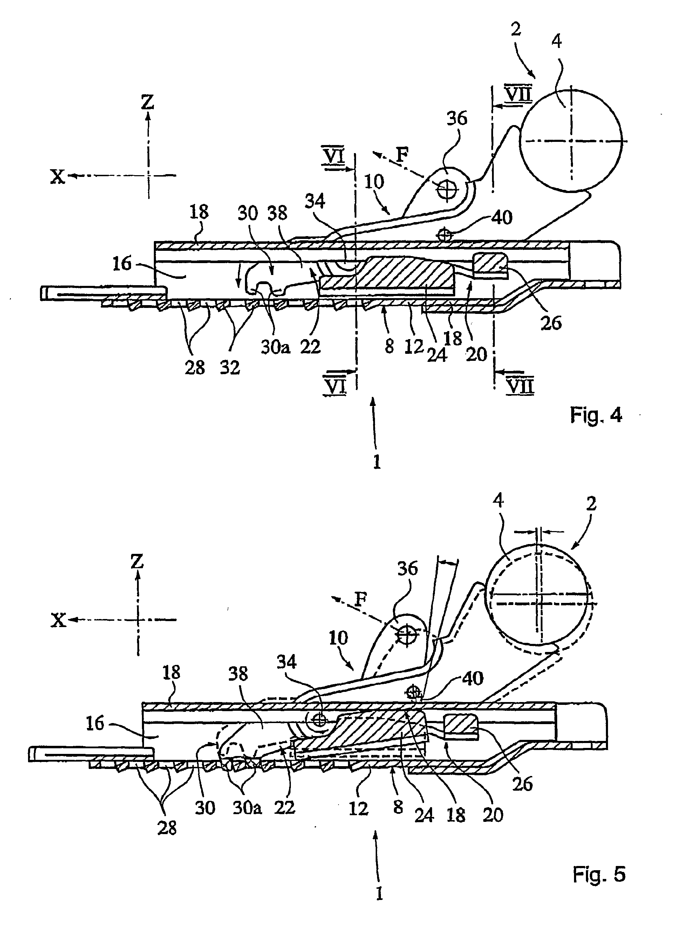

Bei dieser Ausführung werden bevorzugt Reaktionskräfte, die in Richtung einer horizontalen Längsachse X eines üblichen, in den Figuren 1, 3 und 8 sowie zum Teil auch in Fig. 4 und 5 eingezeichneten Fahrzeug-Koordinatensystems wirken, in einem von dem Boden 12 gebildeten Eingriffsbereich aufgenommen. Ein weiterer Eingriffsbereich wird von den Halteschenkeln bzw. den Stützrändern 18 gebildet, und zwar hauptsächlich für Reaktionskräfte, die in Richtung einer Vertikalachse Z und gegebenenfalls auch in Richtung einer horizontalen Querachse Y wirken.

Zu diesem Zweck weisen die Sicherungsmittel 10 ein erstes Eingriffsteil 20 zur Aufnahme der Kräfte hauptsächlich in Z- und Y-Richtung auf sowie weiterhin ein separates zweites Eingriffsteil 22 zur Kraftaufnahme hauptsächlich in Richtung der Längsachse X. Das erste Eingriffsteil 20 ist derart starr mit dem Sitzrahmen 2 verbunden, dass es erst durch im Bereich des Sitzrahmens 2 auftretende Verformungen oder Bewegungen in eine Eingriffsstellung im Bereich der Stützränder 18 der Halteschenkel 16 der Sicherungsschiene 8 gelangt. Demgegenüber ist das zweite Eingriffsteil 22 erfindungsgemäß derart relativ zu dem ersten Eingriffsteil 20 bewegbar, dass es aus einer Nichteingriffsstellung durch Beaufschlagung mit einer bestimmten Betätigungskraft F auch unabhängig von, d. h. insbesondere auch schon zeitlich vor dem ersten Eingriffsteil 20 in eine Eingriffsstellung im Bereich des Bodens 12 der Sicherungsschiene 8 bewegbar ist.

In einer besonders vorteilhaften Ausgestaltung der Erfindung ist das zweite Eingriffsteil 22 derart mit einer nicht dargestellten Sicherheitsgurt-Halterung verbunden, dass eine Gurt-Zugkraft als Betätigungskraft F auf das zweite Eingriffsteil 22 wirkt. Dadurch wird vorteilhafterweise erreicht, dass der Eingriff zur Abstützung der hauptsächlich in X-Richtung wirkenden Reaktionskräfte durch die Gurt-Zugkraft aktiviert wird ("gurtkraftaktivierte Sicherung").

Hierbei ist es weiterhin vorteilhaft, wenn das zweite Eingriffsteil 22 in seiner Eingriffsstellung zusätzlich auch über Stützabschnitte 24 Kräfte in Richtung der Vertikalachse Z und gegebenenfalls der Querachse Y aufnimmt, wobei aber die Stützabschnitte 24 im Bereich der Stützränder 18 der Halteschenkel 16 der Sicherungsschiene 8 in Eingriff gelangen.

Das erste Eingriffsteil 20 hintergreift die Halteschenkel 16 bzw. deren Stützränder 18 ebenfalls mit Stützabschnitten 26 zur Abstützung der Kräfte Z/Y-Richtung.

Die Sicherungsschiene 8 weist im Bereich des Bodens 12 Arretiermittel insbesondere in Form von mehreren in Schienen-Längsrichtung verteilt angeordneten, verzahnungsartigen Aussparungen 28 zum formschlüssigen Eingriff eines klinkenartigen Arretierabschnittes 30 des zweiten Eingriffsteils 22 auf. Die in XRichtung wirkenden Kräfte werden somit über die jeweils zwischen den Aussparungen 28 gebildeten Stege 32 abgestützt. Der Arretierabschnitt 30 kann - wie dargestellt - (mindestens) zwei Eingriffsansätze 30a zum gleichzeitigen, in X-Richtung formschlüssigen Eingreifen in zwei Aussparungen 28 aufweisen.

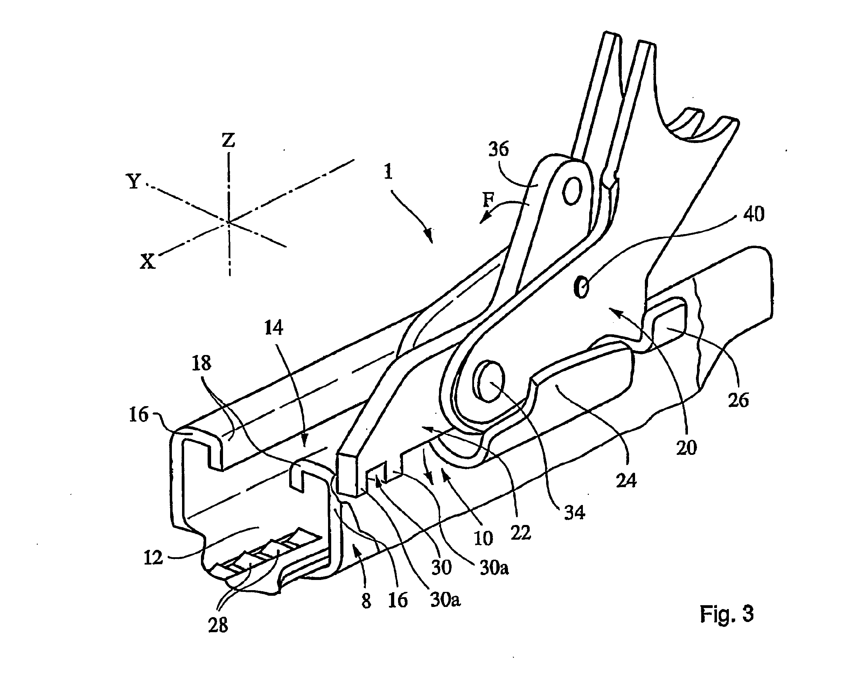

In den dargestellten, bevorzugten Ausführungsbeispielen ist das zweite Eingriffsteil 22 als ein um eine Querachse mittels eines Gelenkbolzens 34 schwenkbar gelagerter Doppelhebel ausgebildet. Dabei ist ein erster Hebelabschnitt 36 mit der Betätigungskraft F beaufschlagbar, und ein zweiter Hebelabschnitt 38 weist den Arretierabschnitt 30 zum Eingriff im Bereich des Bodens 12 der Sicherungsschiene 8 auf. Dabei weist der erste Hebelabschnitt 36 auch die Stützabschnitte 24 zum Hintergreifen der Halteschenkel 16 der Sicherungsschiene 8 auf (siehe z.B. Fig. 3). Zweckmäßigerweise ist das zweite Eingriffsteil 22 derart in seiner Nichteingriffsstellung arretiert, dass ein Entarretieren zum Überführen in die Eingriffsstellung nur mit einer einen bestimmten Mindestwert übersteigenden Betägigungskraft F möglich ist. Hierdurch wird vorteilhafterweise vermieden, dass auch geringere, zum Beispiel bremsbedingte Gurtkräfte zu einem Entarretieren und Eingreifen führen können. Bevorzugt ist das zweite Eingriffsteil 22 in der Nichteingriffsstellung durch eine Solibruchstelle₅ insbesondere in Form eines austauschbaren Abscherstiftes 40, arretiert. Diese Sollbruchstelle bzw. der Abscherstift 40 ist derart ausgelegt, dass ein Bruch erst ab einem bestimmten Wert der Betätigungskraft F erfolgt.

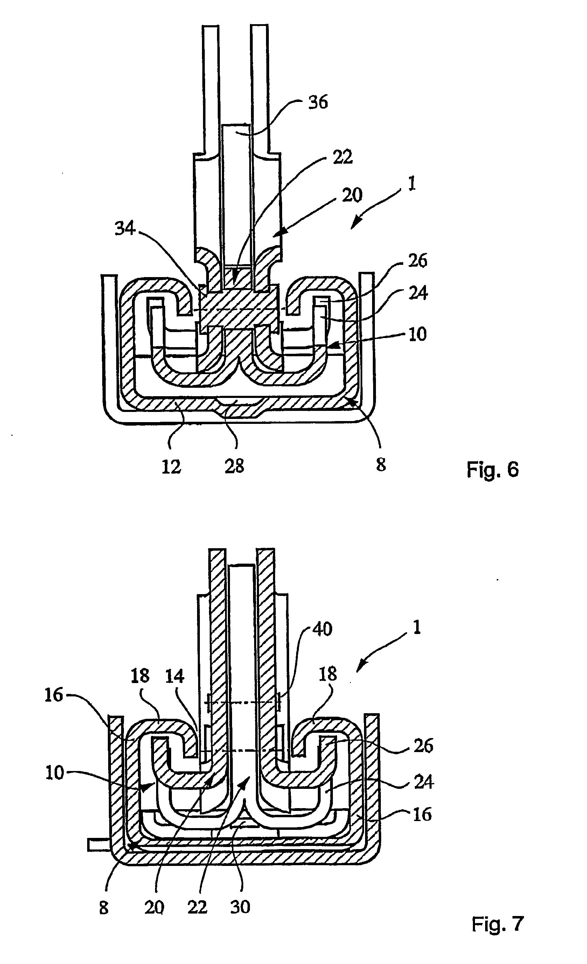

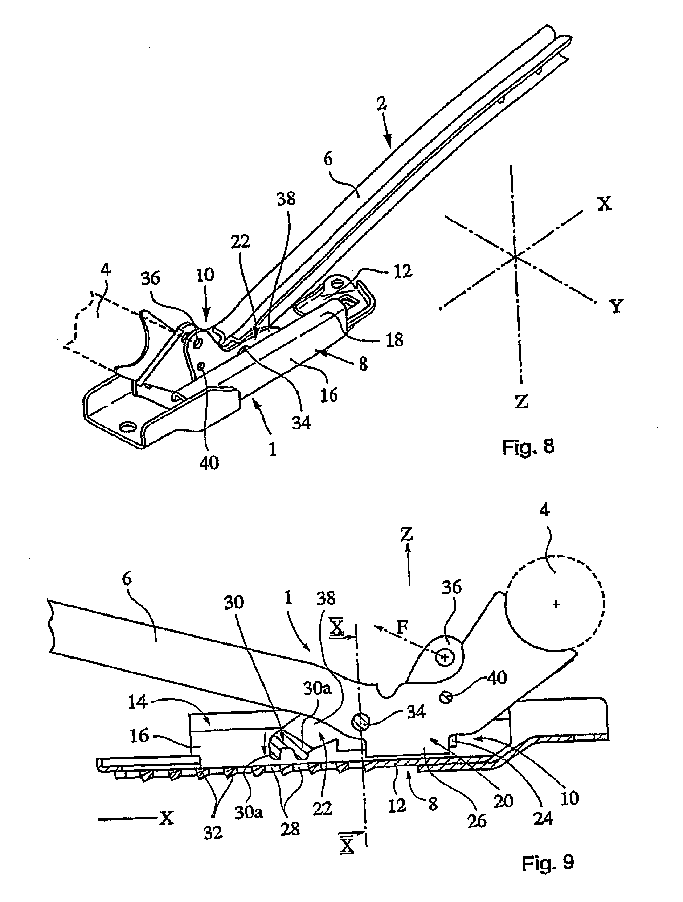

Im Folgenden sollen noch einige Unterschiede der beiden einerseits in den Fig. 1 bis 7 und andererseits in den Fig. 8 bis 10 dargestellten Ausführungsformen erläutert werden.

Gemäß Fig. 1 bis 7 ist das erste Eingriffsteil 20 so an einem hinteren RahmenQuerträger 4 befestigt, insbesondere angeschweißt, dass es von dem Querträger frei in den Bereich der Sicherungsschiene 8 ragt. Hierbei besteht das erste Eingriffsteil 20 zweckmäßig aus zwei zueinander parallelen Flachteilen die zwischen sich eine Aufnahme zur Schwenklagerung des zweiten, hebelförmigen Eingriffsteils 22 bilden. Insofern erstreckt sich der Gelenkbolzen 34 durch fluchtende Öffnungen beider Eingriffsteile. Entsprechendes gilt auch für den Abscherstift 40. Wie sich hierbei insbesondere aus den Figuren 3 bis 5 ergibt, sind zweckmäßigerweise die zum Hintergreifen der Stützränder 18 der Halteschenkel 16 der Sicherungsschiene 8 vorgesehenen Stützabschnitte 24 und 26 der beiden Eingriffsteile 20, 22 in Längsrichtung der Sicherungsschiene 8 gesehen gegeneinander versetzt angeordnet. Dies führt zu dem Vorteil einer sehr geringen Bauhöhe der Sicherungsschiene 8.

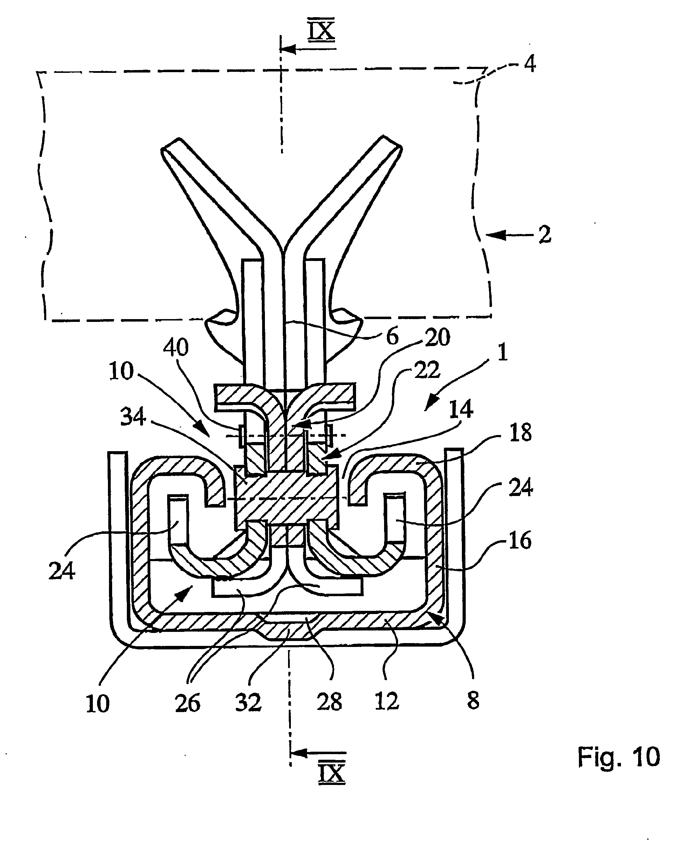

Was die Ausführungsvariante gemäß Fig. 8 bis 10 betrifft, so ist dabei das erste Eingriffsteil 20 als einstückiger Bestandteil eines Rahmen-Längsträgers 8 gebildet. Hierbei besteht das zweite Eingriffsteil 22 aus zwei Flachteilen, die beidseitig des Längsträgers 6 angeordnet sind. Somit nehmen die beiden Flachteile des zweiten Eingriffsteils 22 das erste Eingriffsteil 20 zwischen sich auf. Auch hierbei erstrecken sich der Gelenkbolzen 34 sowie auch der Abscherstift 40 jeweils durch fluchtende Öffnungen beider Eingriffsteile 20, 22. Gemäß dem Querschnitt in Fig. 10 sind hierbei die Stützabschnitte 24, 26 der beiden Eingriffsteile 20, 22 gemeinsam in einem Bereich der Längserstreckung der Sicherungsschiene 8 angeordnet. Vorzugsweise hintergreifen die Stützabschnitte 26 des ersten Eingriffsteils 20 die Halteschenkel 16 mittelbar durch Untergreifen der Stützabschnitte 24 des zweiten Eingriffsteils 22. Allerdings führt dies zu einer etwas größeren Bauhöhe der Anordnung.

## Patentansprüche

1. Sicherungseinrichtung (1) mit einem über seitliche Führungen innerhalb eines Fahrzeugs gehalterten Fahrzeugsitz, bestehend aus mindestens einer im Bereich zwischen den Führungen ortsfest im Fahrzeug anzuordnenden Sicherungsschiene (8) mit zugehörigen, mit dem Fahrzeugsitz verbundenen oder zu verbindenden und derart mit der Sicherungsschiene (8) zusammenwirkenden Sicherungsmitteln (10), dass die Sicherungsmittel (10) bei regulären Sitzbelastungen relativ zu der Sicherungsschiene (8) berührungslos angeordnet sind und durch irreguläre, insbesondere unfallbedingte Verformungen und/oder Bewegungen im Bereich des Fahrzeugsitzes in einen den Fahrzeugsitz gegen weitergehende Verformungen/Bewegungen arretierenden Eingriff mit der Sicherungsschiene (8) gelangen, **dadurch gekennzeichnet, dass** die Sicherungsmittel (10) und die Sicherungsschiene (8) derart ausgebildet sind, dass bei Eingriff Reaktionskräfte, die in Richtung von Achsen (X, Y, Z) eines üblichen Fahrzeug-Koordinatensystems wirken, auf mindestens zwei verschiedene Eingriffsbereiche der Sicherungsschiene (8) verteilt aufgenommen werden, wobei die Sicherungsmittel (10) ein erstes Eingriffsteil (20) zur Aufnahme von Kräften hauptsächlich in Richtung einer Vertikalachse (Z) und gegebenenfalls einer horizontalen Fahrzeug-Querachse (Y) sowie ein zweites Eingriffsteil (22) zur Kraft-Aufnahme hauptsächlich in Richtung einer horizontalen Fahrzeug-Längsachse (X) aufweist und das zweite Eingriffsteil (22) derart relativ zu dem ersten Eingriffsteil (20) bewegbar ist, dass es aus einer Nichteingriffsstellung durch Beaufschlagung mit einer bestimmten Betätigungskraft (F) auch unabhängig von dem ersten Eingriffsteil (20) in eine Eingriffsstellung bewegbar ist.

2. Sicherungseinrichtung nach Anspruch 1, **dadurch gekennzeichnet, dass** das erste Eingriffsteil (20) derart starr mit einem Sitzrahmen (2) verbunden ist, dass es durch im Bereich des Sitzrahmens (2) auftretende Verformungen oder Bewegungen in eine Eingriffsstellung mit der Sicherungsschiene (8) gelangt.

3. Sicherungseinrichtung nach Anspruch 1, **dadurch gekennzeichnet, dass** das zweite Eingriffsteil (22) derart mit einer Sicherheitsgurt-Halterung verbunden ist, dass eine Gurt-Zugkraft als Betätigungskraft (F) auf das zweite Eingriffsteil (22) wirkt.

4. Sicherungseinrichtung nach Anspruch 2 oder 3, **dadurch gekennzeichnet, dass** das zweite Eingriffsteil (22) in seiner Eingriffsstellung zusätzlich auch über Stützabschnitte (24) Kräfte in Richtung der Vertikalachse (Z) und der Querachse (Y) aufnimmt.

5. Sicherungseinrichtung nach einem der Ansprüche 1 bis 4, **dadurch gekennzeichnet, dass** die Sicherungsschiene (8) einen etwa U-oder liegend C-förmigen, in Richtung des Sitzes nach oben zum Eingriff der Sicherungsmittel (10) offenen Querschnitt mit einem Boden (12) und zwei eine Längsöffnung (14) begrenzenden Halteschenkeln (16) aufweist.

6. Sicherungseinrichtung nach Anspruch 5, **dadurch gekennzeichnet, dass** das erste Eingriffsteil (20) der Sicherungsmittel (10) die Halteschenkel (16) der Sicherungsschiene (8) mit Stützabschnitten (26) hintergreift.

7. Sicherungseinrichtung nach Anspruch 5 oder 6, **dadurch gekennzeichnet, dass** die Sicherungsschiene (8) im Bereich des Bodens (12) Arretiermittel insbesondere in Form von mehreren in Schienen-Längsrichtung verteilten, verzahnungsartigen Aussparungen (28) zum Eingriff eines Arretierabschnittes (30) des zweiten Eingriffsteils (22) aufweist.

8. Sicherungseinrichtung nach einem der Ansprüche 1 bis 7, **dadurch gekennzeichnet, dass** das zweite Eingriffsteil (22) als ein um eine Querachse (34) schwenkbar gelagerter Doppelhebel ausgebildet ist, wobei ein erster Hebelabschnitt (36) mit der Betätigungskraft (F) beaufschlagbar ist und ein zweiter Hebelabschnitt (38) zum Eingriff in die Sicherungsschiene (8) dient.

9. Sicherungseinrichtung nach einem der Ansprüche 1 bis 8, **dadurch gekennzeichnet, dass** das zweite Eingriffsteil (22) in seiner NichtEingriffsstellung derart arretiert ist, dass ein Entarretieren zum Überführen in die Eingriffsstellung nur mit einer einen bestimmten Mindestwert übersteigenden Betätigungskraft (F) erfolgt.

10. Sicherungseinrichtung nach Anspruch 9, **dadurch gekennzeichnet, dass** das zweite Eingriffsteil (22) durch eine Sollbruchstelle, insbesondere in Form eines Abscherstiftes-(40), arretiert ist.

11. Sicherungseinrichtung nach einem der Ansprüche 6 bis 10, **dadurch gekennzeichnet, dass** die zum Hintergreifen der Halteschenkel (16) der Sicherungsschiene (8) vorgesehen Stützabschnitte (24, 26) der ersten und zweiten Eingriffsteile (20, 22) in Längsrichtung der Sicherungsschiene (8) gegeneinander versetzt angeordnet sind.

12. Sicherungseinrichtung nach einem der Ansprüche 6 bis 10, **dadurch gekennzeichnet, dass** die zum Hintergreifen der Halteschenkel (16) der Sicherungsschiene (8) vorgesehen Stützabschnitte (24, 26) der ersten und zweiten Eingriffsteile (20, 22) gemeinsam in einem Bereich der Längserstreckung der Sicherungsschiene (8) angeordnet sind, wobei die Stützabschnitte (26) des ersten Eingriffsteils (20) die Halteschenkel (16) der Sicherungsschiene (8) mittelbar über die Stützabschnitte (24) des zweiten Eingriffsteils (22) hintergreifen oder umgekehrt.

13. Sicherungseinrichtung nach einem der Ansprüche 2 bis 12, **dadurch gekennzeichnet, dass** das erste Eingriffsteil (20) einstöckiger Bestandteil eines Rahmen-Längsträgers (6) des Fahrzeugsitzes ist.

14. Sicherungseinrichtung nach einem der Ansprüche 2 bis 12, **dadurch gekennzeichnet, dass** das erste Eingriffsteil (20) an einem Rahmen-Querträger (4) Fahrzeugsitzes befestigt ist und von dem Querträger (4) frei in den Bereich der Sicherungsschiene (8) ragt.

## Claims

1. Safety device (1) for a vehicle seat secured within a vehicle via lateral guides, said device comprising at least one securing rail (8) which is to be arranged in the vehicle in a positionally fixed manner in the region between the guides and has associated securing means (10), which are connected or are to be connected to the vehicle seat and interact with the securing rail (8) in such a manner that, in the case of regular seat loads, the securing means (10) are arranged in a contactless manner relative to the securing rail (8) and, by means of irregular, in particular accident-related deformations and/or movements in the region of the vehicle seat, come into engagement with the securing rail (8) locking the vehicle seat against further deformations/movements, **characterized in that** the securing means (10) and the securing rail (8) are designed in such a manner that, during the engagement, reaction forces, which act in the direction of axes (X, Y, Z) of a conventional vehicle coordinate system, are absorbed in a manner distributed to at least two different engagement regions of the securing rail (8), the securing means (10) having a first engagement part (20) for absorbing forces primarily in the direction of a vertical axis (Z) and, if appropriate, in the direction of a horizontal vehicle transverse axis (Y), and a second engagement part (22) for absorbing force primarily in the direction of a horizontal vehicle longitudinal axis (X), and the second engagement part (22) being movable relative to the first engagement part (20) in such manner that, by a certain actuating force (F) being applied to it, it can be moved from a non-engagement position into an engagement position also independently of the first engagement part (20).

2. Safety device according to Claim 1, **characterized in that** the first engagement part (20) is connected rigidly to a seat frame (2) in such a manner that deformations or movements occurring in the region of the seat frame (2) cause it to come into an engagement position with the securing rail (8).

3. Safety device according to Claim 1, **characterized in that** the second engagement part (22) is connected to a seatbelt securing means in such a manner that a belt tensile force acts on the second engagement part (22) as actuating force (F).

4. Safety device according to Claim 2 or 3, **characterized in that**, in its engagement position, the second engagement part (22) additionally also uses supporting sections (24) to absorb forces in the direction of the vertical axis (Z) and the transverse axis (Y).

5. Safety device according to one of Claims 1 to 4, **characterized in that** the securing rail (8) has an approximately U- or horizontally C-shaped cross section which is open upward in the direction of the seat for the engagement of the securing means (10) with a base (12) and two retaining limbs (16) bounding a longitudinal opening (14).

6. Safety device according to Claim 5, **characterized in that** the first engagement part (20) of the securing means (10) uses supporting sections (26) to engage behind the retaining limbs (16) of the securing rail (8).

7. Safety device according to Claim 5 or 6, **characterized in that** the securing rail (8) has locking means in the region of the base (12), in particular in the form of a plurality of toothing-like cutouts (28) distributed in the longitudinal direction of the rail, for engagement of a locking section (30) of the second engagement part (22).

8. Safety device according to one of Claims 1 to 7, **characterized in that** the second engagement part (22) is designed as a double lever mounted pivotably about a transverse axis (34), it being possible for a first lever section (36) to have the actuating force (F) applied to it, and a second lever section (38) serving for engagement in the securing rail (8).

9. Safety device according to one of Claims 1 to 8, **characterized in that** the second engagement part (22) is locked in its non-engagement position in such a manner that an unlocking for transferring it into the engagement position takes place only by means of an actuating force (F) exceeding a certain minimum value.

10. Safety device according to Claim 9, **characterized in that** the second engagement part (22) is locked by a predetermined breaking point, in particular in the form of a shearing pin (40).

11. Safety device according to one of Claims 6 to 10, **characterized in that** the supporting sections (24, 26) of the first and second engagement parts (20, 22), which sections are provided for engaging behind the retaining limbs (16) of the securing rail (8), are offset with respect to each other in the longitudinal direction of the securing rail (8).

12. Safety device according to one of Claims 6 to 10, **characterized in that** the supporting sections (24, 26) of the first and second engagement parts (20, 22), which sections are provided for engaging behind the retaining limbs (16) of the securing rail (8), are arranged together in a region of the longitudinal extent of the securing rail (8), the supporting sections (26) of the first engagement part (20) engaging behind the retaining limbs (16) of the securing rail (8) indirectly via the supporting sections (24) of the second engagement part (22) or vice versa.

13. Safety device according to one of Claims 2 to 12, **characterized in that** the first engagement part (20) is an integral part of a frame longitudinal member (6) of the vehicle seat.

14. Safety device according to one of Claims 2 to 12, **characterized in that** the first engagement part (20) is fastened to a frame transverse member (4) of the vehicle seat and protrudes freely from the transverse member (4) into the region of the securing rail (8).

## Revendications

1. Dispositif de sécurité (1) pour un siège de véhicule fixé par le biais de glissières latérales à l'intérieur d'un véhicule, constitué d'au moins un rail de sécurité (8) à disposer fixement dans le véhicule dans la région entre les glissières, avec des moyens de sécurité (10) associés, connectés ou à connecter au siège du véhicule, et coopérant avec le rail de sécurité (8) de telle sorte que les moyens de sécurité (10) soient disposés sans contact par rapport au rail de sécurité (8) dans le cas de contraintes usuelles du siège et qu'ils parviennent en engagement, bloquant le siège de véhicule contre toute déformation ou tout mouvement supplémentaire, avec le rail de sécurité (8) sous l'effet de déformations et/ou de mouvements inhabituels, en particulier causés par un accident dans la région du siège de véhicule, **caractérisé en ce que** les moyens de sécurité (10) et le rail de sécurité (8) sont réalisés de telle sorte qu'en cas d'engagement, des forces de réactions qui agissent dans la direction d'axes (X, Y, Z) d'un système de coordonnées usuel du véhicule, soient reçues de manière distribuée sur au moins deux régions d'engagement différentes du rail de sécurité (8), les moyens de sécurité (10) comprenant une première partie d'engagement (20) pour recevoir des forces principalement dans la direction d'un axe vertical (Z) et éventuellement d'un axe transversal horizontal (Y) du véhicule, ainsi qu'une deuxième partie d'engagement (22) pour recevoir des forces principalement dans la direction d'un axe longitudinal horizontal (X) du véhicule, et la deuxième partie d'engagement (22) peut être déplacée par rapport à la première partie d'engagement (20) de telle sorte qu'elle puisse être déplacée dans une position d'engagement depuis une position de non engagement par sollicitation par une force d'actionnement déterminée (F), également indépendamment de la première partie d'engagement (20).

2. Dispositif de sécurité selon la revendication 1, **caractérisé en ce que** la première partie d'engagement (20) est connectée rigidement à un châssis de siège (2) de telle sorte qu'elle parvienne dans une position d'engagement avec le rail de sécurité (8) sous l'effet de déformations ou de mouvements se produisant dans la région du châssis de siège (2).

3. Dispositif de sécurité selon la revendication 1, **caractérisé en ce que** la deuxième partie d'engagement (22) est connectée à une fixation de ceinture de sécurité de telle sorte qu'une force de traction de ceinture agisse comme une force d'actionnement (F) sur la deuxième partie d'engagement (22).

4. Dispositif de sécurité selon la revendication 2 ou 3, **caractérisé en ce que** la deuxième partie d'engagement (22) reçoit dans sa position d'engagement en outre aussi par le biais de portions de support (24), des forces s'exerçant dans la direction de l'axe vertical (Z) et de l'axe transversal (Y).

5. Dispositif de sécurité selon l'une quelconque des revendications 1 à 4, **caractérisé en ce que** le rail de sécurité (8) présente une section transversale approximativement en forme de U ou de C couché, ouverte dans la direction du siège vers le haut pour l'engagement des moyens de sécurité (10), avec un fond (12) et deux branches de retenue (16) délimitant une ouverture longitudinale (14).

6. Dispositif de sécurité selon la revendication 5, **caractérisé en ce que** la première partie d'engagement (20) des moyens de sécurité (10) vient en prise par l'arrière avec les branches de retenue (16) du rail de sécurité (8) par des portions de support (26).

7. Dispositif de sécurité selon la revendication 5 ou 6, **caractérisé en ce que** le rail de sécurité (8) présente, dans la région du fond (12), des moyens de blocage, notamment sous la forme de plusieurs évidements (28) de type denture, répartis dans la direction longitudinale du rail, pour l'engagement d'une portion de blocage (30) de la deuxième partie d'engagement (22).

8. Dispositif de sécurité selon l'une quelconque des revendications 1 à 7, **caractérisé en ce que** la deuxième partie d'engagement (22) est réalisée sous la forme d'un double levier monté de manière à pouvoir pivoter autour d'un axe transversal (34), une première portion de levier (36) pouvant être sollicitée par la force d'actionnement (F) et une deuxième portion de levier (38) servant à s'engager dans le rail de sécurité (8).

9. Dispositif de sécurité selon l'une quelconque des revendications 1 à 8, **caractérisé en ce que** la deuxième partie d'engagement (22) est bloquée dans sa position de non engagement de telle sorte qu'un déblocage pour le passage dans la position d'engagement ne puisse avoir lieu qu'avec une force d'actionnement (F) dépassant une valeur minimale déterminée.

10. Dispositif de sécurité selon la revendication 9, **caractérisé en ce que** la deuxième partie d'engagement (22) est bloquée par un point destiné à la rupture, en particulier sous forme de goupille sécable (40).

11. Dispositif de sécurité selon l'une quelconque des revendications 6 à 10, **caractérisé en ce que** les portions de support (24, 26) des première et deuxième parties d'engagement (20, 22), prévues pour venir en prise par l'arrière avec les branches de retenue (16) du rail de sécurité (8) sont décalées l'une par rapport à l'autre dans la direction longitudinale du rail de sécurité (8).

12. Dispositif de sécurité selon l'une quelconque des revendications 6 à 10, **caractérisé en ce que** les portions de support (24, 26) des première et deuxième parties d'engagement (20, 22), prévues pour venir en prise par l'arrière avec les branches de retenue (16) du rail de sécurité (8) sont disposées ensemble dans une région de l'étendue longitudinale du rail de sécurité (8), les portions de support (26) de la première partie d'engagement (20) venant en prise par l'arrière avec les branches de retenue (16) du rail de sécurité (8) de manière indirecte par le biais des portions de support (24) de la deuxième partie d'engagement (22), ou inversement.

13. Dispositif de sécurité selon l'une quelconque des revendications 2 à 12, **caractérisé en ce que** la première partie d'engagement (20) est réalisée d'une seule pièce avec un support longitudinal de châssis (6) du siège du véhicule.

14. Dispositif de sécurité selon l'une quelconque des revendications 2 à 12, **caractérisé en ce que** la première partie d'engagement (20) est fixée à un support transversal de châssis (4) du siège du véhicule et pénètre depuis le support transversal (4) librement dans la région du rail de sécurité (8).
